# EUROPEAN PATENT SPECIFICATION

(11) **EP 3 371 665 B1**
(45) Date of publication and mention of the grant of the patent: **20.03.2019**
(21) Application number: 15820704.3
(22) Date of filing: 10.12.2015
(51) Int. Cl.: G05B 19/05, G06N 5/02

(54) **DISTRIBUTED EMBEDDED DATA AND KNOWLEDGE MANAGEMENT SYSTEM INTEGRATED WITH PLC HISTORIAN**
VERTEILTE EINGEBETTETE DATEN UND WISSENSVERWALTUNGSSYSTEM MIT INTEGRIERTEM PLC-HISTORIKER
DONNÉES INTÉGRÉES DISTRIBUÉES ET SYSTÈME DE GESTION DE CONNAISSANCE INTÉGRÉ AVEC HISTORIQUE PLC

(43) Date of publication of application: 12.09.2018
(73) Proprietor: Siemens Aktiengesellschaft, 80333 München (DE)
(72) Inventor: HERMONT, Bernardo, Monmouth Junction, New Jersey 08852 (US); ROSCA, Bogdan, Malvern, Pennsylvania 19355 (US); ROSCA, Justinian, West Windsor, New Jersey 08550 (US); SURESH, Sindhu, Monroe Twp., New Jersey 08831 (US); WANG, Lingyun, Princeton, New Jersey 08540 (US)
(74) Representative: Horn Kleimann Waitzhofer Patentanwälte PartG mbB
(86) International application number: PCT/US2015/064863
(87) International publication number: WO 2017/099772

(56) References cited:
- EP-A2- 1 895 740
- US-A1- 2009 089 232
- US-A1- 2014 277 604

## Description

### TECHNICAL FIELD

The present disclosure relates to a distributed data management system for Intelligent PLCs. The various systems and methods may be applied to industrial automation applications, as well as various other applications where Intelligent PLCs are used.

### BACKGROUND

A programmable logic controller (PLC) is a specialized computer control system configured to execute software which continuously gathers data on the state of input devices to control the state of output devices. A PLC typically includes three major components: a processor (which may include volatile memory), volatile memory comprising an application program, and one or more input/output (I/O) ports for connecting to other devices in the automation system.

Conventional automation systems follow a pyramid structure, which calls for the transfer of all raw data (millions of sample points) from PLCs to the historian at an upper layer (e.g., SCADA or MES level). Pushing of data into the upper level reduces the resolution and readiness of data which, in turn, limits the effectiveness of analytics for extracting insights from the PLC behavior and increases the latency to intervene in the control process for control optimization. The ability of PLCs to support in depth data analytics based on their privileged access to process data and controller logic is underutilized in conventional systems. The latter is due to static controller logic/configuration, which does not currently support dynamic adaptive changes or post commissioning phase changes of the control logic, and also does not support awareness of other PLC's data and context when this is required.

An additional drawback of conventional automation systems is that field level controllers do not maintain and manage knowledge bases. For example, most conventional Ethernet-based controllers are connected to their masters essentially to transfer raw data to supervisory level systems, without being aware of their peers data, knowledge, and behavior, which pushes the decision making process to the upper layers. The controller's context is not used to obtain deeper analytic insights. Analytical data models are currently built at the upper levels where controller's context information (e.g. representation of function blocks metadata that can be used for data reverse engineering) is not available. Inefficient decision making. Unavailability of locally stored historical input/output data and knowledge and analytical data models at lower level impacts efficient decision making for controlling local device.

Conventional automation systems are also extremely limited at the amount of historian knowledge maintained locally on PLCs. In turn, this limits the functionality of the PLC. For example, in-cycle processing cannot be currently performed if recent historical information (i.e., short term data) is required. This results in calculations being carried out externally and pushed back to the PLC. Moreover, the PLC's lack of a local historian limits the possibility of performing real time data analytics that support dynamic adaptation of control parameters which aim at optimizing system operations.

Additionally, without local information at the PLC and other control layer devices, it is challenging, if not impossible, to implement effective and robust in-field analytics solutions in conventional automation systems. Conventional solutions for in-field analytics are currently implemented as batch processes, supporting retrospective analysis of past production (e.g., past batches). Online analysis of production is only possible with some delay. Therefore, direct intervention into control based on the analysis is often impractical for time-critical processes.

EP 1 895 740 A2 discloses an industrial automation device including a receiver component that receives a request for structured data retained within the industrial controller. A location component that locates metadata associated with the requested structured data and transmits the data to a requesting entity. For example, the industrial automation device can be an industrial controller, a proxy device, a type library, etc.

US 2009/0089232 A1 discloses systems and methods that enable historians (e.g. micro-historians) to function as proxies, to supply plant level data, (e.g. history data) back to the controllers. Accordingly, typically such micro historians can function as clients/servers, to provide higher level data to the controllers (e.g. from third part databases). The historians can create a proxy that image an object on a server associated with controllers (e.g. programmable logic controller). Such objects can contain data; pieces of code; operations or combinations thereof, for example.

US 2014/0277604 A1discloses a distributed big data device in a process plant including embedded big data appliance configured to locally stream and store, as big data, data that is generated, received, or observed by the device, and to perform one or more learning analyses on at least a portion of the stored data. The embedded big data appliance generates or creates learned knowledge based on a result of the learning analysis, which the device may use to modify its operation to control a process in real-time in the process plant, and/or which the device may transmit to other devices in the process plant. The distributed big data device may be a field device, a controller, an input/output device, or other process plant device, and may utilize learned knowledge created by other devices when performing its learning analysis.

### SUMMARY

Embodiments of the present invention address and overcome one or more of the above shortcomings and drawbacks, by providing methods, systems, and apparatuses related to a distributed storage system provided by control layer devices such as Intelligent PLCs. For example, the techniques described herein address the problem of making the local historian data and contextualization knowledge available in a distributed data infrastructure by allowing data and analytics to be distributed from the distributed system to the in-cycle analytics processing engine. The technology described herein is particularly well-suited for, but not limited to, various industrial automation applications.

According to some embodiments of the present invention, a system for storing data in an industrial production environment, the system comprises a distributed data management system stored on a plurality of intelligent programmable logic controller devices. Each intelligent programmable logic controller device comprises a volatile computer-readable storage medium comprising a process image area, a non-volatile computer-readable storage medium; a control program configured to provide operating instructions to a production unit; an input/output component configured to update the process image area during each scan cycle with data associated with the production unit; a distributed data management component comprising an instance of the distributed data management system; a contextualization component, a historian component, and a data analytics component. The contextualization component is configured to generate contextualized data by annotating contents of the process image area with automation system context information. The historian component is configured to locally store the contents of the process image area and the contextualized data, and which makes the contents available across the distributed data management system through the distributed data management component. The data analytics component is configured to execute one or more reasoning algorithms for analyzing data stored across the distributed data management system using the distributed data management component.

In some embodiments, the aforementioned system further includes a knowledge manager component configured to dynamically modify the one or more reasoning algorithms during runtime of the control program based on one or more declarative knowledge models. These declarative knowledge models may comprise, for example, ontologies expressed using the Web Ontology Language (OWL), a predictive model expressed using the Predictive Model Markup Language (PMML) standard, and/or one or more rules expressed using the Rule Interchange Format (RIF) standard.

In some embodiments of the aforementioned system, the reasoning algorithms used by the data analytics component of each respective intelligent programmable logic controller device are configured based on one or more vendor-specified knowledge models. These vendor-specified knowledge models may include, for example, information related to one or more capabilities of the plurality of intelligent programmable logic controller devices, diagnostic knowledge available at the plurality of intelligent programmable logic controller devices, and/or data layout information used by the plurality of intelligent programmable logic controller devices.

The various features of the aforementioned system may be adapted, enhanced, or refined based on the processing capabilities of the host hardware. For example, in some embodiments, each respective intelligent programmable logic controller device further comprises one or more processors configured to execute the control program and, in parallel with execution of the control program, modify the one or more reasoning algorithms in parallel with execution of the control program.

According to other embodiments of the present invention, a method for storing data in an industrial production environment includes a first intelligent programmable logic controller executing a control program configured to provide operating instructions to a production unit over a plurality of scan cycles and updating a process image area during each of the plurality of scan cycles with data associated with the production unit. The method further includes the first intelligent programmable logic controller generating contextualized data by annotating contents of the process image area with automation system context information and inserting the contents of the process image area and the contextualized data into a local non-volatile computer readable medium on the first intelligent programmable logic controller. This local non-volatile computer readable medium is part of a distributed storage system stored across the first intelligent programmable logic controller and a plurality of second intelligent programmable logic controllers. The insertion of the data associated with the production unit into the local non-volatile computer readable medium may be triggered, for example, based on changes to the operating instructions and the data associated with the production unit. The first intelligent programmable logic controller executes one or more reasoning algorithms for analyzing data stored across the distributed storage system.

The aforementioned method may have additional features, refinements or other variations in different embodiments of the present invention. For example, in some embodiments, the method further includes the first intelligent programmable logic controller dynamically modifying the one or more reasoning algorithms during runtime of the control program based on one or more declarative knowledge models. In some embodiments of the aforementioned method, the local non-volatile computer readable medium comprises a NoSQL database which has a table equivalent view.

The reasoning algorithms used in the aforementioned method may be configured, for example, based on one or more vendor-specified knowledge models. For example, these vendor-specified knowledge models may include information related to one or more capabilities of the first intelligent programmable logic controller, diagnostic knowledge available at the first intelligent programmable logic controller, and/or data layout information used by the first intelligent programmable logic controller.

In some embodiments, the aforementioned method may be executed in a parallel computing environment. For example in one embodiment, the first intelligent programmable logic controller executes the control program using a first core of a processor included in the first intelligent programmable logic controller. The reasoning algorithms may be dynamically modified using a second core of the processor included in the first intelligent programmable logic controller.

According to other embodiments of the present invention, an article of manufacture for storing data in an industrial production environment comprises a non-transitory, tangible computer-readable medium holding computer-executable instructions for performing the aforementioned method, with or without the additional features discussed above.

Additional features and advantages of the invention will be made apparent from the following detailed description of illustrative embodiments that proceeds with reference to the accompanying drawings.

### BRIEF DESCRIPTION OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following Figures:
FIG. 1 provides an architecture diagram illustrating an industrial automation system where intelligent devices form a distributed data management system (DDMS) for automation system data, according to some embodiments;
FIG. 2 provides a conceptual view of an Intelligent PLC, according to some embodiments;
FIG. 3 provides an illustration of a DDMS architecture for distributed data and knowledge management, as well as distributed analytics, according to some embodiments;
FIG. 4 provides a conceptual view of how information may be transferred in and out of a DDMS node, according to some embodiments;
FIG. 5 provides an additional illustration of how a DDMS node instance supports large data transfer to/from distributed data infrastructure, according to some embodiments;
FIG. 6 provides an example of an Intelligent PLC logic rule update triggered by an external device or application, according to some embodiments;
FIG. 7 provides an illustration of how sharded data access may be implemented across the DDMS infrastructure, according to some embodiments; and
FIG. 8 shows a three-step process for retrieving and processing data within a distributed data management system, according to some embodiments of the present invention.

### DETAILED DESCRIPTION

Systems, methods, and apparatuses are described herein which relate generally to a distributed storage system implemented across a plurality of intelligent programmable logic controllers, referred to herein as "Intelligent PLCs." According to various embodiments described herein, an Intelligent PLC is a node in a cluster of non-homogeneous nodes, which implements one of multiple roles (e.g. control, high bandwidth data acquisition, etc.) and pulls data from other nodes as needed to perform embedded analytics at a level not possible in conventional MES systems. Additionally the Intelligent PLC can retrieve local knowledge or knowledge from other nodes. This ability, in conjunction with the local historian and knowledge models and reasoning capabilities as well as in-field analytics, opens the door for powerful knowledge-driven distributed analytics on the cluster, therefore making the Intelligent PLC cluster a powerful real-time data storing, knowledge storing, analytics and interface engine to the entire automation process. The Intelligent PLC can leverage distributed data and analytics technologies in order to define control systems with (1) increased functionality based on true in-field analytics, (2) increased flexibility in configuring, adding, customizing, changing and removing components, and (3) rapid installation, expansion of existing functions and development capabilities. All of the above drastically decreases the number of people and the expertise of the people required to install, operate, optimize, monitor, diagnose, and also the training required to perform these functions. The techniques described herein may be used, for example, to provide a coherent image of time, data (e.g., time series data), data organization, and data names across an industrial automation system and make data available immediately as it is created.

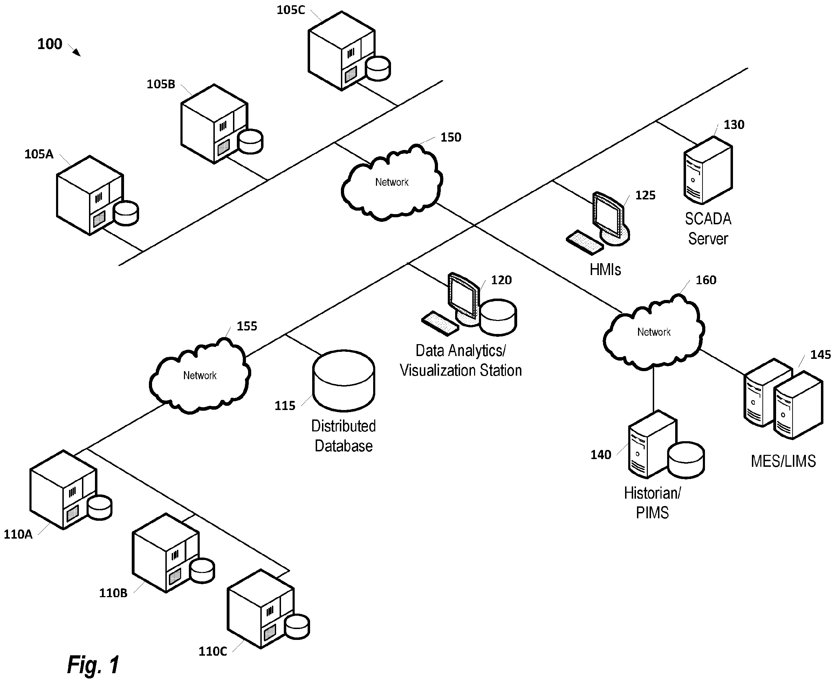

FIG. 1 provides an architecture diagram illustrating an industrial automation system 100 where intelligent devices form a distributed data management system (DDMS) for automation system data, according to some embodiments. DDMS can be defined as a distributed data and knowledge base containing process information, which has a data analytics layer on top of it. Distribution exists over a cluster of nodes. Each instance of DDMS hosts client and server roles, one of which can be activated according to the role of the DDMS instance at a certain time. Usually, the node that starts the process is acting as a client and the remaining nodes that process or store data are acting as servers. However, a node can be acting as a client and a server simultaneously, and execute one or more processes at a time, which may vary according to the current processing demands and workload.

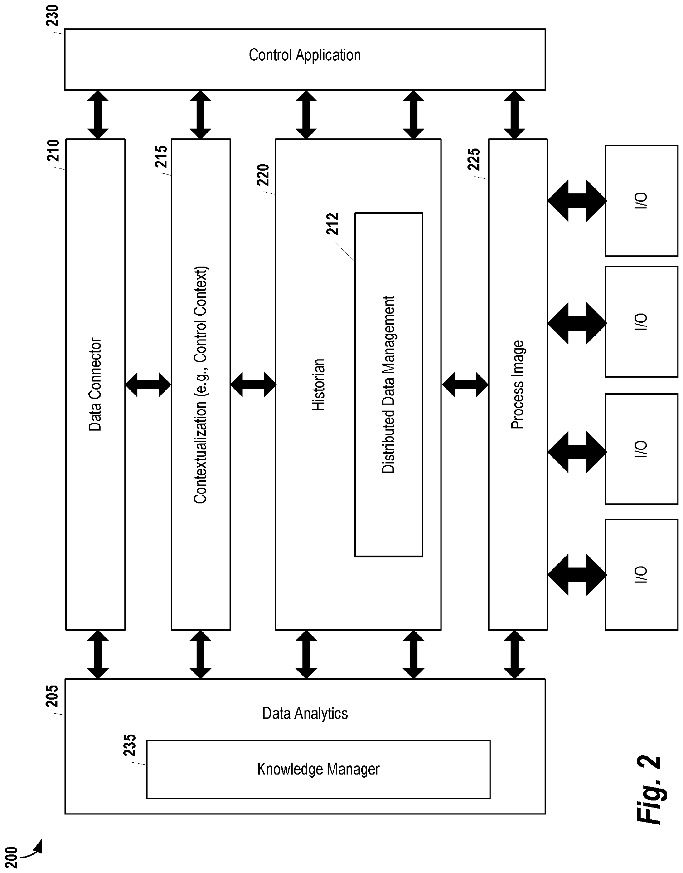

In the example of FIG. 1, each DDMS node is an Intelligent PLC. Briefly, the Intelligent PLC offers several technical features which may be present in various combinations, according to different embodiments. For example, the Intelligent PLC include an efficient storage mechanism for time series data (*i.e.,* a "historian" function) which allows short/mid-term archiving of high resolution time-stamped data. With high fidelity data, few, if any, events are lost. Efficient compression algorithms (e.g. a variation of swinging door) may be used to reduce storage and communication demands. The Intelligent PLC is discussed in greater detail below with respect to FIG. 2. It should be noted that FIG. 1 represents a high-level, simplified overview of an architecture that may be used with the techniques described herein. This architecture can be modified to include additional devices that may be present in real-world implementations such as, for example, routing devices, connections to additional data networks, etc.

It should be noted that, while the DDMS nodes in FIG. 1 are Intelligent PLCs, the present invention is not limited as such. Other embodiments of the DDMS may include nodes which are other intelligent devices that meet some minimum computing requirements (e.g., compatible operating system, memory, and disk) for hosting an instance of the DDMS. Additionally, it should be noted that the architecture presented in FIG. 1 does not include any master or central node.

Distributed data management may be implemented over the industrial automation system 100 using different techniques in different embodiments. In some embodiments, a distributed file system (DFS) is used for storage of data across the devices generated by the Intelligent PLCs 105A, 105B, 105C, 110A, 110B, and 110C. A DFS offers the ability to quickly scale in terms of processing power and storage at a very low comparable cost to distributed database system. Thus, for applications that include many parallelizable processing operations, a DFS may provide a more efficient solution for the distributed storage of data. In other embodiments, the Intelligent PLCs are used to implement a robust distributed database management system that provides properties like Atomicity, Consistency, Isolation and Durability which may be used, along with scalability and processing capabilities. It can provide a data management layer that supports querying in an SQL like manner, as an abstraction of a partitioned data access on many nodes, and also functions that can take advantage of data processing locally on nodes where the data resides (i.e., data locality).

In the example of FIG. 1, the nodes of the distributed data management system employed by the industrial automation system 100 include Intelligent PLCs 105A, 105B, 105C, 110A, 110B, and 110C. Although FIG. 1 only shows six Intelligent PLCs, it should be understood that any number of Intelligent PLCs may be used with the techniques described herein. Thus, the distributed data management system supported by architecture provided in FIG. 1 may dynamically grow and shrink by adding or removing computing resources depending on the system needs. Moreover, the storage capacity of the distributed data management system can be increased by adding dedicated or commodity hardware resources (e.g., server racks, additional controllers). For example, as explained in greater detail below, in some embodiments, a Distributed Database 115 server is added as a node of the distributed data management system to provide long-term storage of data stored on the Intelligent PLCs 105A, 105B, 105C, 110A, 110B, and 110C. Nodes can be added to the distributed data management system using any technique generally known in the art. For example, in some embodiments, new devices can be deployed with functionality for communicating with the distributed data management system. In other embodiments, such functionality may be remotely uploaded to a new or existing device, for example, using a push technique through script execution.

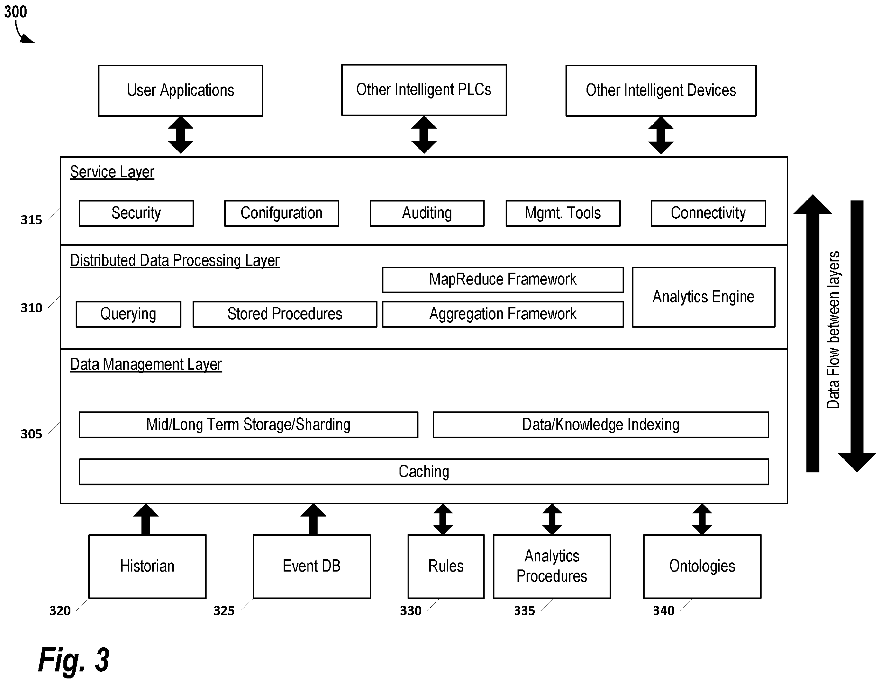

Each Intelligent PLC 105A, 105B, 105C, 110A, 110B, and 110C comprises a distributed data management component. In some embodiments, the distributed data management component included at each Intelligent PLC is capable of storing data originated from the controller through the same interface into shared memory or on the file system. For example, as discussed in greater detail below with respect to FIG. 3, each Intelligent PLC 105A, 105B, 105C, 110A, 110B, and 110C comprises an embedded process historian that has a local view of the names, meaning, and organization of data historized locally. Using the distributed data management component, data generated by each respective historian can be shared across the system 100.

The data stored at each Intelligent PLC 105A, 105B, 105C, 110A, 110B, and 110C may be consumed by client applications that run inside controllers or on any device that has access to the distributed data management system provided by the system 100 shown in FIG. 1. In addition to storage, each Intelligent PLC 105A, 105B, 105C, 110A, 110B, and 110C may also include cluster management services and a processing engine, which allows tasks such as distributed storage and communication, as well as distributed processing and coordination.

The technique used to locate and manage data across the Intelligent PLC 105A, 105B, 105C, 110A, 110B, and 110C may vary according to how distributed storage is implemented. For example, in embodiments where a DFS such as the Hadoop DFS is used for distributed storage, one or more of the Intelligent PLC 105A, 105B, 105C, 110A, 110B, and 110C serve as a "name node." Each name node manages a directory tree of all files in the DFS, and tracks where across the system 100 the file data is stored. Client applications can communicate with the name node to locate a file or to perform operations on the file (adding, copying, move, delete, etc.). The name node responds to the successful requests by returning a list of relevant devices where the data is stored. It should be noted that the name node is a single point of failure for the DFS. Thus, in some embodiments, multiple name nodes may be used to provide redundancy.

In embodiments where a distributed database management system is used to implement distributed storage, data may be stored on the Intelligent PLC 105A, 105B, 105C, 110A, 110B and 110C using sharding techniques. As is well understood in the art, sharding is the strategy that a distributed database uses for locating its partitioned data. This mechanism is often used to support deployments with data sets that require distribution and high throughput operations. This is done through a sharding key definition that is the criteria used to separate data between controllers. The sharding mapping may be stored by a specific server instance or inside each controller. In both cases, the sharding information is accessible to all devices. Each sharding key holder device can coordinate the data transferring process with other peers, since the sharding metadata holds the data/controller location mapping. Thus, a distributed data management system (such as the one implemented using Intelligent PLC 105A, 105B, 105C, 110A, 110B and 110C) can provide parallelization and low data traffic across the network.

The Intelligent PLCs 105A, 105B, 105C, 110A, 110B, and 110C may communicate with one another via network connection using standard networking protocols (e.g., TCP, RPC, etc.). Such communication may be used, for example, to implement distributed data fetching and distributed processing tasks. In both cases, the process may be initiated from any controller, and the latter will trigger new connections to other controllers that store the needed data. Note that broadcast messages do not need to be sent across the various networks, as only the controllers that have the requested data are targeted by the coordinator (e.g., the controller which started the data fetching or distributed processing task/Map Reduce job), eliminating unnecessary network traffic. Furthermore, if the processing is a distributed processing task, then no data will be passed over the network except the results of the processing. This is achieved by sending the computation code and executing it on the controller that holds the data of interest.

In addition to communicating with one another, Intelligent PLCs 105A, 105B, 105C, 110A, 110B, and 110C may also communicate with any other TCP, Open Database Connectivity (ODBC), and/or OPC Unified Architecture (UA) clients such as a Distributed Database 115, a Data Analytics/Visualization Station 120, one or more Human-machine Interfaces (HMIs) 125, a SCADA Server 130, a Historian/PIMs Server 140, and servers 145 associated with Manufacturing Execution Systems (MES) and/or Laboratory Information Management Systems (LIMS). Each component of the architecture may be connected using a local intranet (e.g., implemented via Ethernet) and one or more internets 150, 155, 160.

The Distributed Database 115 is a high capacity storage server that stores data that is no longer available on the Intelligent PLCs 105A, 105B, 105C, 110A, 110B, and 110C. This data is still available to the distributed data management system and behaves just like another distributed node in the system. The Distributed Database 115 may be implemented, for example, using a NoSQL, scalable and fast data storage which can provide real-time distributed long term data access. It may include an ODBC connector, similar to other relational database configurations.

Any client station in the industrial automation system 100 can inject algorithms from the Algorithms Store into one or more of the Intelligent PLCs 105A, 105B, 105C, 110A, 110B, and 110C. The Intelligent PLCs 105A, 105B, 105C, 110A, 110B, and 110C may execute the algorithm on a distributed fashion (on multiple controllers) and then aggregate and send the results to the client station. In the example of FIG. 1, a Data Analytics/Visualization Station 120 holds also the Application/Algorithms Store, which can be uploaded and executed on the Intelligent PLCs 105A, 105B, 105C, 110A, 110B, and 110C. Additionally, in some embodiments, human-machine interfaces (HMIs) 125 located throughout the production facility may be used to access the distributed data management system, either directly or via the Data Analytics/Visualization Station 120. In some embodiments, the Data Analytics/Visualization Station 120 may include a graphical user interface (GUI) configured to, for example, receive requests for data stored in a distributed data management system applications and/or display visualizations related to data stored across the distributed database system. Similar functionality may also be available at the HMIs 125 or other components of the system.

The distributed data management system provided by the Intelligent PLCs 105A, 105B, 105C, 110A, 110B, and 110C is interoperable with existing automation infrastructure components. For example, the Supervisory Control and Data Acquisition (SCADA) Server 130 can connect and pull distributed data from Intelligent PLCs 105A, 105B, 105C, 110A, 110B, and 110C as well as other components of the system (e.g., Distributed Database 115) using OPC UA and/or ODBC clients. Similarly, the Historian/PIMs Server 140, and servers associated with MES/LIMS 145 may access data across the distributed data management system, with little or no modification to their existing operations. As time and resources allow, these higher-layer components may be modified to more efficiently operate with the distributed data management component included at each of Intelligent PLCs 105A, 105B, 105C, 110A, 110B, and 110C.

The DDMS architecture shown in FIG. 1 can support a large number of Intelligent PLCs. As discussed above, each Intelligent PLC (or more generally, node) hosts an instance of the DDMS. This instance brings distributed storage and processing capabilities to the controllers, which can communicate to each other and to client or engineering stations in order to, for example: organize and index local data and knowledge to keep overall coherency of data and knowledge and know what is where; historize analytic task results based on the local historian in each PLC; update the distributed long term storage or local storage for caching; update Intelligent PLC knowledge and configurations (rules, parameters, cluster setups, thresholds, etc.); execute data analytics tasks, that is local calculations or distributed calculations; and fetch distributed or local data and retrieve results needed to answer queries.

FIG. 2 provides a conceptual view of an Intelligent PLC 200, according to some embodiments. Process Image Component 225 is a memory area in a controller's CPU volatile system memory which is updated in each processing/scan cycle based on data associated with the production devices (e.g., the inputs and outputs of connected I/Os). In each processing step, the Control Application 230 reads the Process Image Component 225, executes deployed application logic, and writes results back into the Process Image Component 225.

Continuing with reference to FIG. 2, the process image of each cycle is read and permanently stored locally on a non-volatile physical storage medium by the Historian Component 220. In addition, the Historian Component 220 may additionally store contextual information related to the process image data (described below with respect to the Contextualization Component 215). The Historian Component 220 may be configured to deploy data compression algorithms to reduce data volume and provide applications with access to past process images. Data may be stored either for a fixed time window or online algorithms are used to realize dynamic caching heuristics. As part of the Historian Component 220, intelligent data generation algorithms may continuously analyze the process image and context to adjust data generation parameters (e.g. sampling rate) of connected I/Os. For example, for fast changing sensor signals, a high sampling rate may be selected while for slowly changing sensor signals a lower sampling rate is sufficient.

A Distributed Data Management Component 212 allows the Intelligent PLC 200 to operate as an instance of a distributed data management system or a distributed file system (see, e.g., FIG. 1). Using the Distributed Data Management Component 212, the Intelligent PLC can share data generated by the Historian Component 220 with the other devices operating in the industrial automation system. In this way, the Intelligent PLC's 200 historical, contextual, and analytical view of the system may be shared with controllers and other devices using a parallel distributed processing algorithm. For example, the Historian Component 220 has a local view of the names, meaning, and organization of data historized locally by the Intelligent PLC 200. Using the Distributed Data Management Component 212, this view of the automation system may be shared.

For embodiments where a DFS is used for storage, the Distributed Data Management Component 212 will be an embedded process providing suitable DFS functionality. For example, in embodiments that use the previously mentioned Hadoop DFS, the Distributed Data Management Component 212 may be the software that allows the Intelligent PLC 200 to operate as a data node with in the cluster. As such, the Distributed Data Management Component 212 may be used to format and organize blocks of historian data into data chunks that may be transferred, replicated, and processed throughout the cluster. In some embodiments, the Distributed Data Management Component 212 may also be used to obtain from name nodes the addresses of other data nodes where the newly created data chunk is to be replicated without transformation for storage or computation. In other embodiments, Distributed Data Management Component 212 may be configured such that the Intelligent PLC 200 functions as the name node for the cluster and the addresses are stored locally. Once the addresses are obtained, the Distributed Data Management Component 212 may be used to autonomously manage data transfer of the chunk of historian data to the other nodes in the cluster. Using the Distributed Data Management Component 212, the Intelligent PLC 200 and other similar devices in the automation environment can implement the historian stack as a parallel distributed processing algorithm, where each embedded process historian on a node has the above functionality.

In embodiments where a distributed data management system is used for distributing storage across the system, the Distributed Data Management Component 212 may be implemented using various database systems generally known in the art. For example, in some embodiments, the data stored at each controller is stored in a NoSQL database which has a table equivalent structure. As is understood in the art, the term "NoSQL" is used to define a class of data stores that are non-relational in their design. There are various types ofNoSQL databases which may be generally grouped according to their underlying data model. These groupings may include databases that use column-based data models (e.g., Cassandra), document-based data models (e.g., MongoDB), key-value based data models (e.g., Redis), and/or graph-based data models (e.g., Allego). Any type of NoSQL database may be used to implement the various embodiments described herein. In some embodiments, historian data is stored across the distributed data management system in a block of data specific database format and organization that is optimized for the distributed data fabric. The size of each block may be specified, for example, based on a desired time granularity of the data or a maximum number of variables to be tracked.

Continuing with reference to FIG. 2, a Data Analytics Component 205 is configured to execute one or more reasoning algorithms for analyzing data stored across the distributed data management system using the Distributed Data Management Component 212. Various data reasoning algorithms may be included in the Data Analytics Component 205. For example, in some embodiments, these algorithms include one or more of clustering, classification, logic-based reasoning, and statistical analysis algorithms. Moreover, algorithms may be specified via a model which can be deployed during runtime on the device. The Data Analytics Component 205 may also include various analytical models and dedicated algorithms to interpret these models. The results generated by the Data Analytics Component 205 may be stored in the Historian Component 220, written back to the Process Image Component 225 and/or provided to external components via the Data Connector Component 210. Thus, the Intelligent PLC may be viewed as a device for providing distributed analytics to the other devices in the automation system.

The Data Analytics Component 205 comprises a Knowledge Manager Component 235 which is configured to dynamically modify the reasoning algorithms used by the Data Analytics Component 205 during runtime of the Control Application 230 based on one or more declarative knowledge models. In some embodiments, the Intelligent PLC 200 comprise one or more processors (not shown in FIG. 2) which are configured to execute the Control Application 230 and, in parallel with execution of the Control Application 230, modify the one or more reasoning algorithms. Parallelization may be implemented by distributing tasks across multiple processors (or processor cores) based on priority information. For example, one or more processors may be dedicated to high priority processes such as execution of the Control Application 230, while other processors are dedicated to lower priority processes, including reasoning algorithm modifications.

Various types of declarative knowledge models generally known in the art may be used with the Knowledge Manager Component 235. For example, in some embodiments, the declarative knowledge models comprise ontologies expressed using the Web Ontology Language (OWL). The models may be expressed, for example, using the Predictive Model Markup Language (PMML) standard and/or using the Rule Interchange Format (RIF) standard. The individual knowledge models may be generic in nature, proprietary, vendor-specific, or any combination thereof.

As noted above, the Intelligent PLC 200 includes a Distributed Data Management Component 212 which allows the Intelligent PLC 200 to operate as an instance of a distributed data management system. In order to leverage the collective knowledge of the system, in some embodiments, the more knowledge models used with the Knowledge Manager Component 235 may comprise information such as the capabilities of the devices operating in the distributed data management system, diagnostic knowledge available at each device in the distributed data management system, and/or data layout information used by the distributed data management system.

In some embodiments, the reasoning algorithms used by the Knowledge Manager Component 235 are configured based on one or more vendor-specified knowledge models. Each vendor-specified knowledge models may include, for example, information related to capabilities of the Intelligent PLC 200, diagnostic knowledge available at the Intelligent PLC 200, and/or data layout information used by the Intelligent PLC 200.

A Contextualization Component 215 is configured to generate contextualized data by annotating contents of the Process Image Component 225 with automation system context information to facilitate its later interpretation. Context information, as used herein, may include any information that describes the meaning of data. For example, context of data in automation systems may include information about the device that generated the data (e.g., a sensor), about the structure of the automation system (e.g., topology of a plant), about the working mode of the system (e.g., downtime event), about the automation software and its status while the data was generated, and/or about the product/batch that was produced while the data was generated. The Contextualization Component 215 is configured to provide data to any of the other components for more specific processing needs. The context information generated by the Contextualization Component 215 may not be restricted to the asset structure but may also include control knowledge, product-specific information, process information, event information, and potentially other aspects such as external events like weather information. Some context information may be imported from engineering tools (e.g. Siemens Totally Integrated Automation tools). Additionally, in some embodiments, the Contextualization Component 215 provides semantic contextualization. The context may be represented by a standard modeling language (e.g. Web Ontology Language, Resource Description Framework) where the meaning of the language constructs is formally defined. Contextualization of data with these semantic modeling standards enables business analytics applications to automatically understand and interpret the data provided from the automation system without manual configuration effort.

Any data captured or generated by the components of Intelligent PLC 200 may be provided to external components via a Data Connector Component 210. Thus, for example, the Intelligent PLC can communicate with name nodes to obtain the addresses of other data nodes where the newly created block of historian data can be replicated without transformation for storage or computation. Moreover, using the underlying technology of the fabric, the device can autonomously manage its data transfer. In some embodiments, the Data Connector Component 210 delivers data via a push methodology (i.e., actively sending data to an external component). In other embodiments, a pull methodology may be used where data is queried by an external component). Additionally, push and pull methodologies may be combined in some embodiments such that the Intelligent PLC is configured to handle both forms of data transfer.

In some embodiments, the Intelligent PLC 200 may include monitoring functionality for storing process and controller information in the distributed database using the Distributed Data Management Component 212. Additionally, context information from the Contextualization Component 215 can be monitored and used in order to obtain deeper analytic insights. This can be done by detecting changes in the process behaviors through routines that expose meta-information about the Intelligent PLC 200 logic, which can be used as input to further control logic enhancements. Access to logic of the Intelligent PLC 200 and monitoring of lower level data flows helps early stage detection of controller misconfigurations.

Additional examples of Intelligent PLC features that may be used in conjunction with different embodiments are provided in U.S. Patent Application No. 14/467,125 filed 8/25/2014 and entitled "INTELLIGENT PROGRAMMABLE LOGIC CONTROLLER"; PCT Patent Application No. PCT/US14/63105 filed 10/30/2014 and entitled "USING SOFT-SENSORS IN A PROGRAMMABLE LOGIC CONTROLLER"; PCT Patent Application No. PCT/US14/62796 filed 10/29/2014 and entitled "SYSTEM AND METHOD FOR AUTOMATIC COMPRESSION ALGORITHM SELECTION AND PARAMETER TUNING BASED ON CONTROL KNOWLEDGE." The entirety of each of the foregoing applications is incorporated herein by reference.

FIG. 3 provides an illustration of a DDMS architecture 300 for distributed data and knowledge management, as well as distributed analytics, according to some embodiments. The DDMS architecture partitions functionality into three conceptual layers: a Data Management Layer 305, a Distributed Data Processing Layer 310, and a Service Layer 315. The functionality presented in FIG. 3 may be provided, for example, by the various components of the Intelligent PLC 200 shown in FIG. 2.

The Data Management Layer 305 deals with storage and operational capabilities around data and knowledge, providing functions for data and knowledge organization and indexing, caching, and sharding. Data from Historian 320 and Event Databases 325 are real-time related and can be seen as a cache for the DDMS storage. The format of the local data is registered to the DDMS node enabling data access and processing over the local data. Knowledge models (asset, product, process, control, etc.) are updated on each DDMS node enabling local knowledge access. Relevant diagnostic knowledge (rule and analytic descriptions) will also be uploaded on DDMS nodes. Changes will be propagated automatically to all Intelligent PLCs in the cluster using the distributed storage and versioning capabilities of DDMS. Operational capabilities can also be provided as part of the DDMS, for example, multiple versions of data can coexist in the same database instance.

The Data Management Layer 305 is tightly connected to the local Historian 320 in a way that allows the transfer of in-cycle analytic results from local Analytics Procedures 335 towards local nodes of the DDMS system. At the same time information which is produced outside of the Analytics Procedures 335 (even outside of the PLC) can be made available to the Analytics Procedures 335, thus enabling rich contextualization on PLC level. More than that, the Analytics Procedures 335 may be able to understand the context mapping for the nearby controllers. Local Rules 330 and Ontologies 340 may be used to customize the Analytics Procedures 335 and other processes for the automation environment.

The Distributed Data Processing Layer 310 offers in-field analytic and querying tools that can be executed over the distributed data, including the use of analytic engines such as, for example, R and/or JavaScript. In some embodiments, these tools are accessed externally through the Service Layer 315, and can run over local (single Intelligent PLC) or distributed (multiple Intelligent PLCs) data, allowing local processing which avoids undesirable network traffic and contributes for a more scalable infrastructure.

The Service Layer 315 is configured to provide connectivity, accessibility, and security to the DDMS platform, thus external applications and devices can take advantage of the processing and data management capabilities of the platform. Access to the platform can be made directly by standard query languages like SQL/SPARQL or using client tools such as ODBC, OPC UA, Mongo APIs, which leverage interoperability on Intelligent PLCs and empower the distributed data access from external devices and applications. Any type of data that resides in DDMS can be stored in an encrypted format. This strategy adds one more layer of security to the DDMS platform, ensuring that confidential data will be properly protected from unauthorized access. In addition, for performance purposes, storage compression can also be enabled to optimize storage utilization.

As noted above, the DDMS architecture 300 shown in FIG. 3 introduces a connection between the local Historian 320 and DDMS which, in turn, enables the capability that near real time analytics to be done outside of the in-cycle environment. The connection may be implemented as a one directional channel between the historian and the DDMS. Through this channel, the Historian 320 may push data into the DDMS (e.g., to other nodes) based on logic determined by DDMS. This logic could include, for example, timed events, capacity quotas, or historized results from the in-cycle analytic engine. The connection between the DDMS and the infield analytic engine may also be unidirectional in some embodiments and serve the purpose of moving analytics and context information from DDMS to the in-cycle analytic engine. Additionally, the DDMS can push in new or updated knowledge models.

New DDMS nodes can be added by dynamically reconfiguring the Intelligent PLC infrastructure (i.e., a DDMS cluster). As a consequence, Intelligent PLCs can be introduced, replaced, or removed without affecting the existing field level automation baseline. Also, it should be noted that the DDMS architecture 300 is horizontally scalable because it is applicable to a number of Intelligent PLCs ranging from one to thousands of controllers. Adding nodes to a distributed database schema is equivalent to adding more data to a common, partitioned table. The newly added data becomes available to other controllers on the network as soon as it is loaded into its own (controller) database.

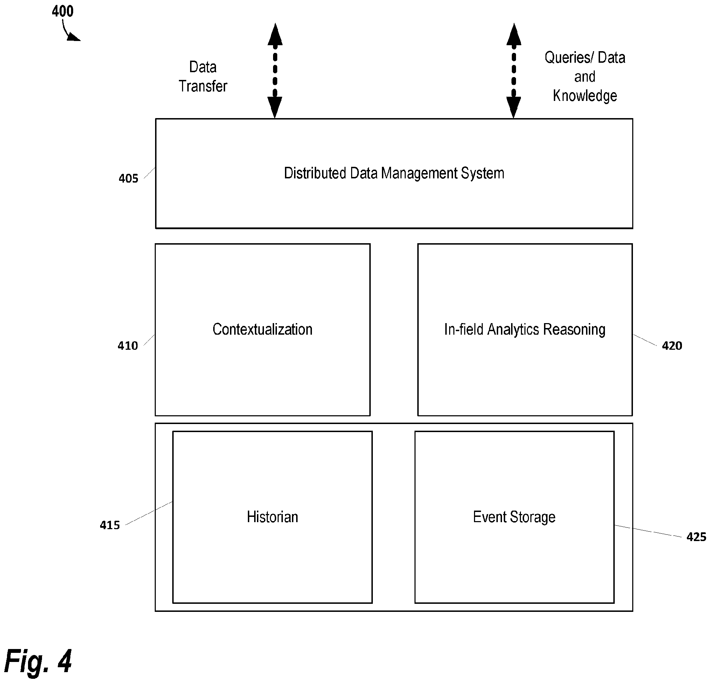

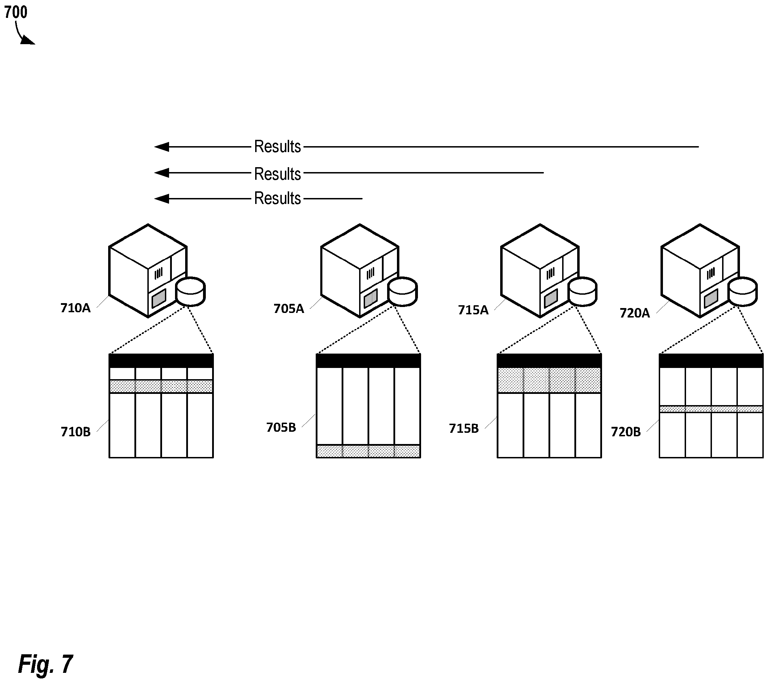

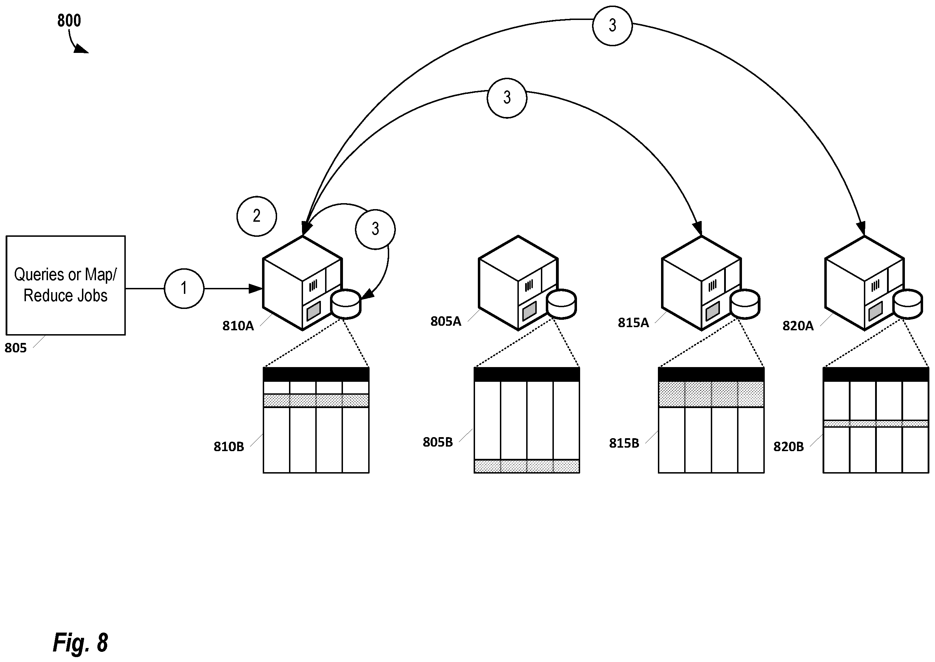

FIG. 4 provides a conceptual view 400 of how information may be transferred in and out of a DDMS node, according to some embodiments. Note that many of the elements shown in FIG. 4 are similar to those presented with the Intelligent PLC 200 in FIG. 2. In FIG. 4, these elements are organized functionally to highlight the main features of the DDMS node involved with transferring data into and out of the Intelligent PLC. The DDMS 405 is responsible for data and knowledge indexing/versioning for distributed data storage and organizes all the information (local and global) into multiple collections per Intelligent PLC, such as a time data series collection, a knowledge collection for each model (e.g. assets, product, events, control, etc.), and other data collections. The collection structure and content can be modified over time, e.g. expand dynamically based on how data is used, or shrink by giving up the requirement to store some data. The simplest example is the data flow from sensor data (captured by I/O Modules) to the DDMS. At first, inputs and outputs are processed by the PLC. The time series data is then registered to the local node database instance so it can be accessed externally in a distributed fashion. Possibly, subsets of the data are sharded in the collections of other PLCs from the same cluster. Sharding is discussed in greater detail below with respect to FIGS. 7 and 8.

In FIG. 4, DDMS 405 is the data node interface to the local raw or processed data, events, cached data, knowledge, and the hub for defining flexible analytics on top of these elements, in conjunction with similar such elements existing in the distributed system. Its core functions are defined to efficiently address typical use cases such as, without limitation, data or result transfer in and out of the node, queries, and knowledge transfer, while indexing the embedded data and knowledge within the distributed system and versioning the data and knowledge to insure consistency and coherency.

FIG. 4 shows additional functionality that leverages the data stored across the distributed system. Contextualization functionality 410 is used to contextualize local data using the knowledge stored across the distributed system. Similarly, an In-field Analytics Reasoning functionality 420 may be used to apply reasoning algorithms to data stored across the distributed system.

Historian functionality 415 is used as an internal source of data, while the external sources of data and knowledge are the DDMS cluster nodes. The Historian functionality 415 utilizes local storage capacity for short and midterm process data. In order to support long-term storage of data (e.g., for archiving, multi-year data analysis, and/or regulatory purposes) a dedicated DDMS instance (not shown in FIG. 4) which supports large amounts of data can be provided and still be part of the distributed data infrastructure just like another instance of the DDMS.

As shown in FIG. 4, results of analytics generated by the In-Field Analytics Reasoning functionality 420 can also be historized by the Historian functionality 415. The historian local short/mid-term storage for data is organized, indexed, and sharded for distributed data storage globally by the DDMS node instance. Results of infield analytics (e.g., soft sensors) can also represent a time series of data. The corresponding collection structure and content can be modified over time; nonetheless the registration of the data in DDMS 405 is done automatically once the data is historized. For example, the results of an infield analytic task that performs calculations (e.g., power consumption) every second, can periodically (e.g., every hour or day) be migrated to the DDMS instance, allowing results to be accessible to other Intelligent PLCs and also external automation tools (e.g., SCADA, engineering tools, MES). If events are generated by the In-Field Analytics Reasoning functionality 420, Event Storage functionality 425 on the Intelligent PLC may be configured to store the events in a local database. Just like the historian data, once the events are stored, they can be queried by external components (e.g., via the DDMS 405) by the In-Field Analytics Reasoning functionality 420 for further analytics (e.g. for performing root-cause analysis).

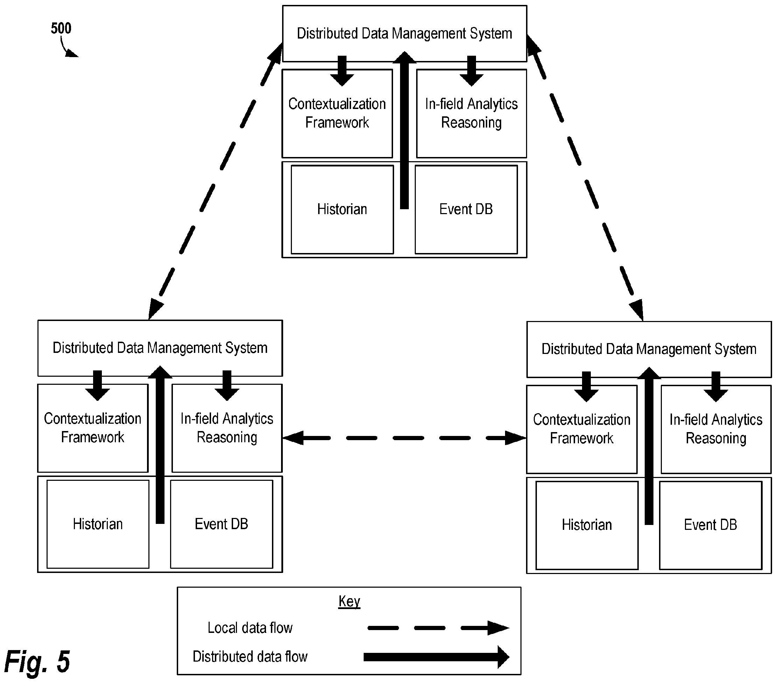

FIG. 5 provides an additional illustration 500 of how a DDMS node instance supports large data transfer to/from distributed data infrastructure (e.g., long term storage DDMS instance), according to some embodiments. Communication among DDMS nodes may occur essentially for data fetching and distributed processing tasks. In both cases, the process can be initiated from any node, and the latter will trigger new connections to other nodes that store the fetched data. In some embodiments, only the nodes that are requested to provide data are triggered by the coordinator (i.e., the controller which started the data fetching or distributed processing task), thus eliminating unnecessary network traffic.

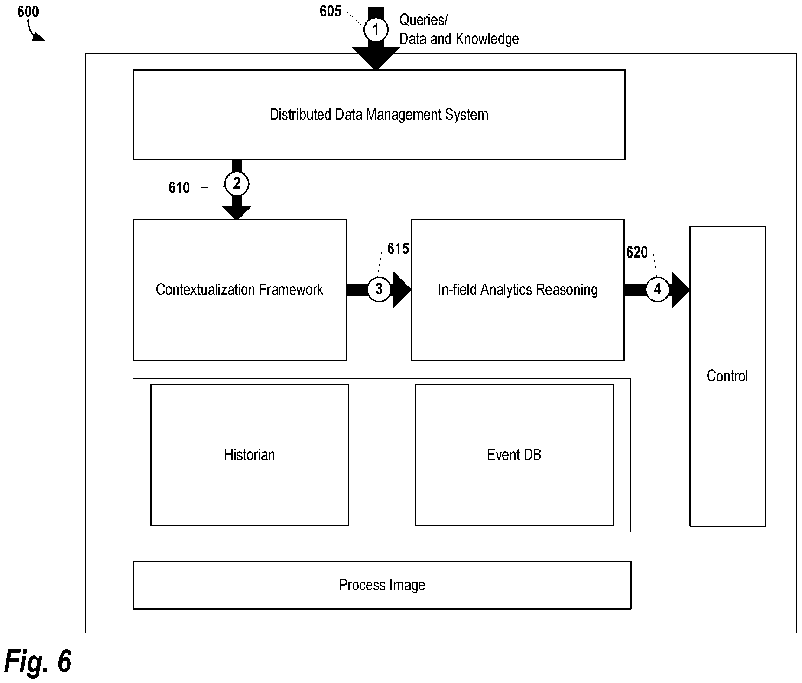

FIG. 6 provides an example 600 of an Intelligent PLC logic rule update triggered by an external device or application, according to some embodiments. Starting at step 605, a rule update started by a process expert is received. Data can also originate from external sources such as controllers and client applications running on any device that supports and is granted to connect to the Intelligent PLC cluster. At step 610, rules are updated to the context knowledge based through one or more data management interfaces. Next, at step 615 the rules are used in-cycle by the embedded analytics. Then, at step 620, the newly created/updated rules are applied to the Intelligent PLC I/O according to the PLC logic. The example 600 shown in FIG. 6 may be adapted to minimize changes to the Intelligent PLC. For example, in one embodiment, an external application starts the update of rules and parameters referenced by PLC infield analytics, the results of which allow changing the PLC control behavior without the need of changing the PLC logic.

FIG. 7 provides an illustration 700 of how sharded data access may be implemented across the DDMS infrastructure, according to some embodiments. Sharding or horizontal partitioning is a mechanism often used to support deployments with data sets that require distribution and high throughput operations. For example, in FIG. 7, there are four controllers 705A, 710A, 715A and 720A which store data subsets 705B, 710B, 715B and 720B, respectively. Controller 710A has initiated an action which requires the other controllers 705A, 715A and 720A to send their respective data subsets. Using the received information, Controller 710A can recreate the original data subset and perform the data operation.

Partitioning is performed using a sharding key definition that is the criterion used to separate data between the controllers 705A, 710A, 715A and 720A. The sharding mapping may be stored by a specific server instance or inside each controller controllers 705A, 710A, 715A and 720A. In both cases, the sharding information is equally accessible to each of controllers 705A, 710A, 715A and 720A. Each sharding key holder device can coordinate the data transferring process with other peers, since the sharding metadata holds the data/controller location mapping. Sharding enables decentralized decision making on control level.

The DDMS is responsible for explicitly specifying what data is stored locally or remotely in the cluster, as the distributed data sources can be internal or external to the present controller boundary. For each collection that needs to be accessed globally, a sharding index is specified, which will provide the location of the sharded data in the cluster. The sharded metadata used to access the distributed data is stored locally on each Intelligent PLC, so each PLC can locate the sharded information efficiently. In addition to sharding indexes, the storage file system for each database may provide internal mechanisms of indexing that speed up the scanning processing to answer queries, specifically for time series. As a consistency mechanism, the database can enforce unique keys, and can also override previous values in case a register matches an existing controller, tag, and timestamp values.

FIG. 8 shows a three-step process 800 for retrieving and processing data within a distributed data management system, according to some embodiments of the present invention. The process 800 begins as Queries or Map/Reduce Jobs 805 which executes a command on an arbitrary controller. Queries for data can be issued by any controllers, allowing ad-hoc query execution, pre-defined queries, and also formula calculation based on controller tags. Map/Reduce jobs in a relational database run within the distributed database that may contain sharded data. These jobs distribute tasks among the nodes, therefore supporting parallel processing in this way. The aggregated results are then returned and saved for further investigation. In addition, other processing can also occur on the client side (e.g., the aggregation of final results extracted from a range of nodes). All jobs and query results will be available to the client in an intelligible ready to use format, such as tabular, csv, or image.

In the example of FIG. 8, this first step is shown as "1" and the arbitrary controller is Controller 810A. The Queries or Map/Reduce Jobs 805 executing the command may be started, for example, by a client machine or any other controller in the system. At the second step (shown as "2" in FIG. 8), the Controller 810A performs a look-up for the data location (either using local data or through communication with a server storing sharding information). Based on the results of this lookup, at the third step (shown as "3" in FIG. 8), the Controller 810A communicates with Controllers 815A and 820A to collect their data subsets 815B and 820B, respectively. Additionally, in this example, the Controller 810A finds a portion of the requested data within its own data subset 805B and retrieves that data accordingly. Note that the Controller 805A does not need to request any data from Controller 810A because the data subset 810B stored at Controller 810A is not needed to respond to the original requests. Once the Controller 810A fetches the data from its own data store and the other controllers 815A and 820A, the Controller 810A processes the collected data to execute the command originally received at the first step of the process 800.

As shown in FIG. 8, data latency may be automatically reduced by bringing queries and processing jobs closer to data due to the above mentioned processing capabilities. In this example, only the results or processed data are transferred through the network. Transfer of raw data is only necessary under some limited circumstances such as data correlation analysis.

To illustrate the value of the distributed system described herein, consider its implementation in the context of an automation OEM operating environment. This environment can be optimized through an integrated system that provides high bandwidth scalable sensing (using vibration sensors), data storage, spindle analysis, and spindle reporting at the scale of the factory floor. To capture the new vibration measurements, an Intelligent PLC that communicates with the sensors may be added to the system and its data may be managed locally or by another Intelligent PLC. From the data and processing management perspective, this appears to be an extension of the controller that already controls and monitors the faulty machine. There is no need to extract data out of the system in order to analyze the outputs created by the new sensors. Instead, a process expert algorithm embedded on the Intelligent PLC and driven by knowledge about the process, assets, and product can analyze the newly collected sensor measurements with a pre-existing process on the same platform. The diagnosis results can be viewed with the help of any data visualization or analytics tool. As a consequence, there is no need for extracting process data from the PLCs to the MES/SCADA level to perform fault analysis on external processors, as the newly monitored data will automatically be available to a distributed multi-PLC system.

The processors described herein as used by embedded controllers may include one or more central processing units (CPUs), graphical processing units (GPUs), or any other processor known in the art. More generally, a processor as used herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

Various devices described herein including, without limitation to the embedded controllers and related computing infrastructure, may include at least one computer readable medium or memory for holding instructions programmed according to embodiments of the invention and for containing data structures, tables, records, or other data described herein. The term "computer readable medium" as used herein refers to any medium that participates in providing instructions to one or more processors for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks. Non-limiting examples of volatile media include dynamic memory. Non-limiting examples of transmission media include coaxial cables, copper wire, and fiber optics, including the wires that make up a system bus. Transmission media may also take the form of acoustic or light waves, such as those generated during radio wave and infrared data communications.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically, wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof. No claim element herein is to be construed under the provisions of 35 U.S.C. 112, sixth paragraph, unless the element is expressly recited using the phrase "means for.

## Claims

1. A system for storing data in an industrial production environment, the system comprising:
a distributed data management system (100) stored on a plurality of intelligent programmable logic controller devices, wherein each respective intelligent programmable logic controller device (105A, 105B, 105C, 110A, 110B, 110C) comprises:
a volatile computer-readable storage medium comprising a process image area;
a non-volatile computer-readable storage medium;
a control program configured to provide operating instructions to a production unit;
an input/output component configured to update the process image area during each scan cycle with data associated with the production unit;
**characterized in that**
a distributed data management component comprising an instance of the distributed data management system (100);
a contextualization component (215) configured to generate contextualized data by annotating contents of the process image area with automation system context information,
a historian component (220) configured to locally store the contents of the process image area and the contextualized data, and which makes the contents available across the distributed data management system through the distributed data management component, and
a data analytics component (205) configured to execute one or more reasoning algorithms for analyzing data stored across the distributed data management system using the distributed data management component.

2. The system of claim 1, wherein each respective intelligent programmable logic controller device (105A, 105B, 105C, 110A, 110B, 110C) further comprises:
a knowledge manager component configured to dynamically modify the one or more reasoning algorithms during runtime of the control program based on one or more declarative knowledge models.

3. The system of claim 2 wherein the one or more declarative knowledge models used by the contextualization component (215) of each respective intelligent programmable logic controller device (105A, 105B, 105C, 110A, 110B, 110C) comprise one or more rules expressed using the Rule Interchange Format (RIF) standard.

4. The system of claim 1, wherein the one or more reasoning algorithms used by the data analytics component (205) of each respective intelligent programmable logic controller device (105A, 105B, 105C, 110A, 110B, 110C) are configured based on one or more vendor-specified knowledge models.

5. The system of claim 4, wherein the one or more vendor-specified knowledge models comprise information related to one or more capabilities of the plurality of intelligent programmable logic controller devices (105A, 105B, 105C, 110A, 110B, 110C), diagnostic knowledge available at the plurality of intelligent programmable logic controller devices (105A, 105B, 105C, 110A, 110B, 110C), and/or data layout information used by the plurality of intelligent programmable logic controller devices (105A, 105B, 105C, 110A, 110B, 110C).

6. The system of claim 1, wherein each respective intelligent programmable logic controller device (105A, 105B, 105C, 110A, 110B, 110C) further comprises:
one or more processors configured to execute the control program and, in parallel with execution of the control program, modify the one or more reasoning algorithms in parallel with execution of the control program.

7. The system of claim 1, the non-volatile computer-readable storage medium included in each respective intelligent programmable logic controller device (105A, 105B, 105C, 110A, 110B, 110C) comprises a NoSQL database which has a table equivalent view.

8. A method for storing data in an industrial production environment, the method comprising:
executing, by a first intelligent programmable logic controller (105A, 105B, 105C, 110A, 110B, 110C), a control program configured to provide operating instructions to a production unit over a plurality of scan cycles;
updating, by the first intelligent programmable logic controller (105A, 105B, 105C, 110A, 110B, 110C), a process image area during each of the plurality of scan cycles with data associated with the production unit;
generating, by the first intelligent programmable logic controller (105A, 105B, 105C, 110A, 110B, 110C), contextualized data by annotating contents of the process image area with automation system context information;
inserting, by the first intelligent programmable logic controller (105A, 105B, 105C, 110A, 110B, 110C), the contents of the process image area and the contextualized data into a local non-volatile computer readable medium on the first intelligent programmable logic controller (105A, 105B, 105C, 110A, 110B, 110C), wherein the local non-volatile computer readable medium is part of a distributed storage system stored across the first intelligent programmable logic controller (105A, 105B, 105C, 110A, 110B, 110C) and a plurality of second intelligent programmable logic controllers (105A, 105B, 105C, 110A, 110B, 110C); and
executing, by the first intelligent programmable logic controller (105A, 105B, 105C, 110A, 110B, 110C), one or more reasoning algorithms for analyzing data stored across the distributed storage system.

9. The method of claim 8, further comprising:
dynamically modifying, by the first intelligent programmable logic controller (105A, 105B, 105C, 110A, 110B, 110C), the one or more reasoning algorithms during runtime of the control program based on one or more declarative knowledge models.

10. The method of claim 8, wherein the local non-volatile computer readable medium comprises a NoSQL database which has a table equivalent view.

11. The method of claim 10, wherein the insertion of the data associated with the production unit into the local non-volatile computer readable medium is triggered based on changes to the operating instructions and the data associated with the production unit.

12. The method of claim 8, wherein the one or more reasoning algorithms are configured based on one or more vendor-specified knowledge models.

13. The method of claim 12, wherein the one or more vendor-specified knowledge models comprise information related to one or more capabilities of the first intelligent programmable logic controller (105A, 105B, 105C, 110A, 110B, 110C), diagnostic knowledge available at the first intelligent programmable logic controller (105A, 105B, 105C, 110A, 110B, 110C), and/or data layout information used by the first intelligent programmable logic controller (105A, 105B, 105C, 110A, 110B, 110C).

14. The method of claim 8, further comprising:
executing, by the first intelligent programmable logic controller (105A, 105B, 105C, 110A, 110B, 110C), the control program using a first core of a processor included in the first intelligent programmable logic controller (105A, 105B, 105C, 110A, 110B, 110C),
wherein the one or more reasoning algorithms are dynamically modified using a second core of the processor included in the first intelligent programmable logic controller (105A, 105B, 105C, 110A, 110B, 110C).

15. An article of manufacture for storing data in an industrial production environment, the article of manufacture comprising a non-transitory, tangible computer-readable medium holding computer-executable instructions for performing a method comprising:
executing a control program configured to provide operating instructions to a production unit over a plurality of scan cycles;
updating a process image area during each of the plurality of scan cycles with data associated with the production unit;
generating contextualized data by annotating contents of the process image area with automation system context information;
inserting the contents of the process image area and the contextualized data into a local non-volatile computer readable medium, wherein the local non-volatile computer readable medium is part of a distributed storage system; and
executing one or more reasoning algorithms for analyzing data stored across the distributed storage system.

## Patentansprüche

1. System zum Speichern von Daten in einer Industrieproduktionsumgebung, wobei das System Folgendes umfasst:
ein Verwaltungssystem (100) für verteilte Daten, das auf einer Vielzahl intelligenter programmierbarer Logiksteuerungseinrichtungen gespeichert ist, wobei jede jeweilige intelligente programmierbare Logiksteuerungseinrichtung (105A, 105B, 105C, 110A, 110B, 110C) Folgendes umfasst:
ein flüchtiges computerlesbares Speichermedium, das einen Prozessbildbereich umfasst,
ein nichtflüchtiges computerlesbares Speichermedium,
ein Steuerprogramm, das konfiguriert ist, Betriebsanweisungen an eine Produktionseinheit bereitzustellen,
eine Eingabe/Ausgabe-Komponente, die konfiguriert ist, den Prozessbildbereich während jedes Abtastzyklus mit der Produktionseinheit zugehörigen Daten zu aktualisieren,
**gekennzeichnet durch**
eine Verwaltungskomponente für verteilte Daten, die eine Instanz des Verwaltungssystems (100) für verteilte Daten umfasst,
eine Kontextualisierungskomponente (215), die konfiguriert ist, durch Annotieren von Inhalten des Prozessbildbereichs mit Automatisierungssystem-Kontextinformationen kontextualisierte Daten zu erzeugen,
eine Protokollierungskomponente (220), die konfiguriert ist, die Inhalte des Prozessbildbereichs und die kontextualisierten Daten lokal zu speichern, und die die Inhalte durch die Verwaltungskomponente für verteilte Daten über das Verwaltungssystem für verteilte Daten hinweg verfügbar macht, und
eine Datenanalytikkomponente (205), die konfiguriert ist, einen oder mehrere Schlussfolgerungsalgorithmen zum Analysieren von über das Verwaltungssystem für verteilte Daten hinweg gespeicherten Daten unter Verwendung der Verwaltungskomponente für verteilte Daten auszuführen.

2. System nach Anspruch 1, wobei jede jeweilige intelligente programmierbare Logiksteuerungseinrichtung (105A, 105B, 105C, 110A, 110B, 110C) ferner Folgendes umfasst:
eine Wissensverwaltungskomponente, die konfiguriert ist, den einen oder die mehreren Schlussfolgerungsalgorithmen zur Laufzeit des Steuerprogramms auf Grundlage eines oder mehrerer deklarativer Wissensmodelle dynamisch zu modifizieren.

3. System nach Anspruch 2, wobei das eine oder die mehreren von der Kontextualisierungskomponente (215) jeder jeweiligen intelligenten programmierbaren Logiksteuerungseinrichtung (105A, 105B, 105C, 110A, 110B, 110C) verwendeten deklarativen Wissensmodelle eine oder mehrere unter Verwendung des "Rule Interchange Format"- (RIF-) Standards ausgedrückte Regeln umfassen.

4. System nach Anspruch 1, wobei der eine oder die mehreren von der Datenanalytikkomponente (205) jeder jeweiligen intelligenten programmierbaren Logiksteuerungseinrichtung (105A, 105B, 105C, 110A, 110B, 110C) verwendeten Schlussfolgerungsalgorithmen auf Grundlage eines oder mehrerer anbieterspezifizierter Wissensmodelle konfiguriert sind.

5. System nach Anspruch 4, wobei das eine oder die mehreren anbieterspezifizierten Wissensmodelle Informationen umfassen, die eine oder mehrere Funktionen der Vielzahl intelligenter programmierbarer Logiksteuerungseinrichtungen (105A, 105B, 105C, 110A, 110B, 110C), an der Vielzahl intelligenter programmierbarer Logiksteuerungseinrichtungen (105A, 105B, 105C, 110A, 110B, 110C) verfügbares Diagnosewissen und/oder von der Vielzahl intelligenter programmierbarer Logiksteuerungseinrichtungen (105A, 105B, 105C, 110A, 110B, 110C) verwendete Datenlayoutinformationen betreffen.

6. System nach Anspruch 1, wobei jede jeweilige intelligente programmierbare Logiksteuerungseinrichtung (105A, 105B, 105C, 110A, 110B, 110C) ferner Folgendes umfasst:
einen oder mehrere Prozessoren, die konfiguriert sind, das Steuerprogramm auszuführen und parallel zur Ausführung des Steuerprogramms den einen oder die mehreren Schlussfolgerungsalgorithmen parallel zur Ausführung des Steuerprogramms zu modifizieren.

7. System nach Anspruch 1, wobei das in jeder jeweiligen intelligenten programmierbaren Logiksteuerungseinrichtung (105A, 105B, 105C, 110A, 110B, 110C) enthaltene nichtflüchtige computerlesbare Speichermedium eine NoSQL-Datenbank umfasst, die eine tabellenäquivalente Ansicht aufweist.

8. Verfahren zum Speichern von Daten in einer Industrieproduktionsumgebung, wobei das Verfahren Folgendes umfasst:
durch eine erste intelligente programmierbare Logiksteuerung (105A, 105B, 105C, 110A, 110B, 110C) erfolgendes Ausführen eines Steuerprogramms, das konfiguriert ist, über eine Vielzahl von Abtastzyklen Betriebsanweisungen an eine Produktionseinheit bereitzustellen,
durch die erste intelligente programmierbare Logiksteuerung (105A, 105B, 105C, 110A, 110B, 110C) erfolgendes Aktualisieren eines Prozessbildbereichs mit der Produktionseinheit zugehörigen Daten während jedes der Vielzahl von Abtastzyklen,
durch die erste intelligente programmierbare Logiksteuerung (105A, 105B, 105C, 110A, 110B, erfolgendes Erzeugen kontextualisierter Daten durch Annotieren von Inhalten des Prozessbildbereichs mit Automatisierungssystem-Kontextinformationen,
durch die erste intelligente programmierbare Logiksteuerung (105A, 105B, 105C, 110A, 110B, erfolgendes Einfügen der Inhalte des Prozessbildbereichs und der kontextualisierten Daten in ein lokales nichtflüchtiges computerlesbares Medium auf der ersten intelligenten programmierbaren Logiksteuerung (105A, 105B, 105C, 110A, 110B, 110C), wobei das lokale nichtflüchtige computerlesbare Medium Teil eines verteilten Speichersystems ist, das über die erste intelligente programmierbare Logiksteuerung (105A, 105B, 105C, 110A, 110B, und eine Vielzahl zweiter intelligenter programmierbarer Logiksteuerungen (105A, 105B, 105C, 110A, 110B, hinweg gespeichert ist, und
durch die erste intelligente programmierbare Logiksteuerung (105A, 105B, 105C, 110A, 110B, erfolgendes Ausführen eines oder mehrerer Schlussfolgerungsalgorithmen zum Analysieren von über das verteilte Speichersystem hinweg gespeicherten Daten.

9. Verfahren nach Anspruch 8, ferner umfassend:
durch die erste intelligente programmierbare Logiksteuerung (105A, 105B, 105C, 110A, 110B, 110C) erfolgendes dynamisches Modifizieren des einen oder der mehreren Schlussfolgerungsalgorithmen zur Laufzeit des Steuerprogramms auf Grundlage eines oder mehrerer deklarativer Wissensmodelle.

10. Verfahren nach Anspruch 8, wobei das lokale nichtflüchtige computerlesbare Medium eine NoSQL-Datenbank umfasst, die eine tabellenäquivalente Ansicht aufweist.

11. Verfahren nach Anspruch 10, wobei die Einfügung der der Produktionseinheit zugehörigen Daten in das lokale nichtflüchtige computerlesbare Medium auf Grundlage von Änderungen der Betriebsanweisungen und der der Produktionseinheit zugehörigen Daten ausgelöst wird.

12. Verfahren nach Anspruch 8, wobei der eine oder die mehreren Schlussfolgerungsalgorithmen auf Grundlage eines oder mehrerer anbieterspezifizierter Wissensmodelle konfiguriert werden.

13. Verfahren nach Anspruch 12, wobei das eine oder die mehreren anbieterspezifizierten Wissensmodelle Informationen umfassen, die eine oder mehrere Funktionen der ersten intelligenten programmierbaren Logiksteuerungseinrichtung (105A, 105B, 105C, 110A, 110B, 110C), an der ersten intelligenten programmierbaren Logiksteuerungseinrichtung (105A, 105B, 105C, 110A, 110B, 110C) verfügbares Diagnosewissen und/oder von der ersten intelligenten programmierbaren Logiksteuerungseinrichtung (105A, 105B, 105C, 110A, 110B, verwendete Datenlayoutinformationen betreffen.

14. Verfahren nach Anspruch 8, ferner umfassend:
durch die erste intelligente programmierbare Logiksteuerung (105A, 105B, 105C, 110A, 110B, erfolgendes Ausführen des Steuerprogramms unter Verwendung eines ersten Kerns eines in der ersten intelligenten programmierbaren Logiksteuerung (105A, 105B, 105C, 110A, 110B, enthaltenen Prozessors,
wobei der eine oder die mehreren Schlussfolgerungsalgorithmen unter Verwendung eines zweiten Kerns des in der ersten intelligenten programmierbaren Logiksteuerung (105A, 105B, 105C, 110A, 110B, 110C) enthaltenen Prozessors dynamisch modifiziert werden.

15. Hergestellter Gegenstand zum Speichern von Daten in einer Industrieproduktionsumgebung, wobei der hergestellte Gegenstand ein nichtflüchtiges, greifbares computerlesbares Medium umfasst, das durch einen Computer ausführbare Anweisungen zum Durchführen eines Verfahrens enthält, welches Folgendes umfasst:
Ausführen eines Steuerprogramms, das konfiguriert ist, über eine Vielzahl von Abtastzyklen Betriebsanweisungen an eine Produktionseinheit bereitzustellen,
Aktualisieren eines Prozessbildbereichs mit der Produktionseinheit zugehörigen Daten während jedes der Vielzahl von Abtastzyklen,
Erzeugen kontextualisierter Daten durch Annotieren von Inhalten des Prozessbildbereichs mit Automatisierungssystem-Kontextinformationen,
Einfügen der Inhalte des Prozessbildbereichs und der kontextualisierten Daten in ein lokales nichtflüchtiges computerlesbares Medium, wobei das lokale nichtflüchtige computerlesbare Medium Teil eines verteilten Speichersystems ist, und
Ausführen eines oder mehrerer Schlussfolgerungsalgorithmen zum Analysieren von über das verteilte Speichersystem hinweg gespeicherten Daten.

## Revendications

1. Système permettant de stocker des données dans un environnement de production industrielle, le système comprenant :
un système de gestion de données distribué (100) stocké sur une pluralité de dispositifs contrôleurs logiques programmables intelligents, chaque dispositif contrôleur logique programmable intelligent (105A, 105B, 105C, 110A, 110B, 110C) respectif comportant :
un support de stockage volatile lisible par ordinateur comprenant une zone d'image de traitement ;
un support de stockage non volatile lisible par ordinateur ;
un programme de contrôle configuré pour fournir des instructions de fonctionnement à une unité de production ;
un composant d'entrée/sortie configuré pour mettre à jour la zone d'image de traitement durant chaque cycle d'analyse avec des données associées à l'unité de production ;
**caractérisé en ce que**
un composant de gestion de données distribué comportant une instance du système de gestion de données distribué (100) ;
un composant de contextualisation (215) configuré pour générer des données contextualisées en annotant le contenu de la zone d'image de traitement avec des informations de contexte de système automatisé,
un composant d'historique (220) configuré pour stocker localement le contenu de la zone d'image de traitement et les données contextualisées, et qui met le contenu à disposition à travers le système de gestion de données distribué par l'intermédiaire du composant de gestion de données distribué, et
un composant d'analytique de données (205) configuré pour exécuter un ou plusieurs algorithmes de raisonnement permettant d'analyser des données stockées à travers le système de gestion de données distribué à l'aide du composant de gestion de données distribué.

2. Système selon la revendication 1, dans lequel chaque dispositif contrôleur logique programmable intelligent (105A, 105B, 105C, 110A, 110B, respectif comprend en outre :
un composant de gestionnaire de connaissances configuré pour modifier dynamiquement les un ou plusieurs algorithmes de raisonnement durant l'exécution du programme de contrôle sur la base d'un ou plusieurs modèles de connaissances déclaratives.

3. Système selon la revendication 2, dans lequel les un ou plusieurs modèles de connaissances déclaratives utilisés par le composant de contextualisation (215) de chaque dispositif contrôleur logique programmable intelligent (105A, 105B, 105C, 110A, 110B, 110C) respectif comprennent une ou plusieurs règles exprimées en utilisant la norme RIF (format d'échange de règles).

4. Système selon la revendication 1, dans lequel les un ou plusieurs algorithmes de raisonnement utilisés par le composant d'analytique de données (205) de chaque dispositif contrôleur logique programmable intelligent (105A, 105B, 105C, 110A, 110B, 110C) respectif sont configurés sur la base d'un ou plusieurs modèles de connaissances spécifiées par le fournisseur.

5. Système selon la revendication 4, dans lequel les un ou plusieurs modèles de connaissances spécifiées par le fournisseur comprennent des informations relatives à une ou plusieurs capacités de la pluralité de dispositifs contrôleurs logiques programmables intelligents (105A, 105B, 105C, 110A, 110B, 110C), des connaissances en matière de diagnostic disponibles au niveau de la pluralité de dispositifs contrôleurs logiques programmables intelligents (105A, 105B, 105C, 110A, 110B, 110C), et/ou des informations de présentation de données utilisées par la pluralité de dispositifs contrôleurs logiques programmables intelligents (105A, 105B, 105C, 110A, 110B, 110C).

6. Système selon la revendication 1, dans lequel chaque dispositif contrôleur logique programmable intelligent (105A, 105B, 105C, 110A, 110B, 110C) respectif comprend en outre :
un ou plusieurs processeurs configurés pour exécuter le programme de contrôle et, en parallèle avec l'exécution du programme de contrôle, modifier les un ou plusieurs algorithmes de raisonnement en parallèle avec l'exécution du programme de contrôle.

7. Système selon la revendication 1, dans lequel le support de stockage non volatile lisible par ordinateur inclus dans chaque dispositif contrôleur logique programmable intelligent (105A, 105B, 105C, 110A, 110B, 110C) respectif comprend une base de données NoSQL qui a une vue équivalente de tables.

8. Procédé permettant de stocker des données dans un environnement de production industrielle, le procédé comprenant :
exécuter, par un premier contrôleur logique programmable intelligent (105A, 105B, 105C, 110A, 110B, 110C), un programme de contrôle configuré pour fournir des instructions de fonctionnement à une unité de production sur une pluralité de cycles d'analyse ;
mettre à jour, par le premier contrôleur logique programmable intelligent (105A, 105B, 105C, 110A, 110B, 110C), une zone d'image de traitement durant chacun de la pluralité de cycles d'analyse avec des données associées à l'unité de production ;
générer, par le premier contrôleur logique programmable intelligent (105A, 105B, 105C, 110A, 110B, 110C), des données contextualisées en annotant le contenu de la zone d'image de traitement avec des informations de contexte de système automatisé ;
insérer, par le premier contrôleur logique programmable intelligent (105A, 105B, 105C, 110A, 110B, 110C), le contenu de la zone d'image de traitement et les données contextualisées dans un support local non volatile lisible par ordinateur sur le premier contrôleur logique programmable intelligent (105A, 105B, 105C, 110A, 110B, 110C), le support local non volatile lisible par ordinateur faisant partie d'un système de stockage distribué stocké sur le premier contrôleur logique programmable intelligent (105A, 105B, 105C, 110A, 110B, 110C) et une pluralité de deuxièmes contrôleurs logiques programmables intelligents (105A, 105B, 105C, 110A, 110B, 110C) ; et
exécuter, par le premier contrôleur logique programmable intelligent (105A, 105B, 105C, 110A, 110B, 110C), un ou plusieurs algorithmes de raisonnement permettant d'analyser des données stockées sur le système de stockage distribué.

9. Procédé selon la revendication 8, comprenant en outre : modifier dynamiquement, par le premier contrôleur logique programmable intelligent (105A, 105B, 105C, 110A, 110B, 110C), les un ou plusieurs algorithmes de raisonnement durant l'exécution du programme de contrôle sur la base d'un ou plusieurs modèles de connaissances déclaratives.

10. Procédé selon la revendication 8, dans lequel le support local non volatile lisible par ordinateur comprend une base de données NoSQL qui a une vue équivalente de tables.

11. Procédé selon la revendication 10, dans lequel l'insertion des données associées à l'unité de production dans le support local non volatile lisible par ordinateur est déclenchée sur la base de changements apportés aux instructions de fonctionnement et aux données associées à l'unité de production.

12. Procédé selon la revendication 8, dans lequel les un ou plusieurs algorithmes de raisonnement sont configurés sur la base d'un ou plusieurs modèles de connaissances spécifiées par le fournisseur.

13. Procédé selon la revendication 12, dans lequel les un ou plusieurs modèles de connaissances spécifiées par le fournisseur comprennent des informations relatives à une ou plusieurs capacités du premier contrôleur logique programmable intelligent (105A, 105B, 105C, 110A, 110B, 110C), des connaissances en matière de diagnostic disponibles au niveau du premier contrôleur logique programmable intelligent (105A, 105B, 105C, 110A, 110B, 110C), et/ou des informations de présentation de données utilisées par le premier contrôleur logique programmable intelligent (105A, 105B, 105C, 110A, 110B, 110C).

14. Système selon la revendication 8, comprenant en outre :
exécuter, par le premier contrôleur logique programmable intelligent (105A, 105B, 105C, 110A, 110B, 110C), le programme de contrôle en utilisant un premier coeur d'un processeur inclus dans le premier contrôleur logique programmable intelligent (105A, 105B, 105C, 110A, 110B, 110C),
les un ou plusieurs algorithmes de raisonnement étant modifiés dynamiquement en utilisant un deuxième coeur du processeur inclus dans le premier contrôleur logique programmable intelligent (105A, 105B, 105C, 110A, 110B, 110C).

15. Article de fabrication permettant de stocker des données dans un environnement de production industrielle, l'article de fabrication comprenant un support non transitoire, matériel, lisible par ordinateur stockant des instructions exécutables par ordinateur destinées à exécuter un procédé comprenant :
exécuter un programme de contrôle configuré pour fournir des instructions de fonctionnement à une unité de production sur une pluralité de cycles d'analyse ;
mettre à jour une zone d'image de traitement durant chacun de la pluralité ; de cycles d'analyse avec des données associées à l'unité de production ;
générer des données contextualisées en annotant le contenu de la zone d'image de traitement avec des informations de contexte de système automatisé ;
insérer le contenu de la zone d'image de traitement et les données contextualisées dans un support local non volatile lisible par ordinateur, le support local non volatile lisible par ordinateur faisant partie d'un système de stockage distribué ; et
exécuter un ou plusieurs algorithmes de raisonnement permettant d'analyser des données stockées sur le système de stockage distribué.
